# EUROPEAN PATENT APPLICATION

(11) **EP 1 231 145 A1**
(43) Date of publication of application: **14.08.2002**
(21) Application number: 02003068.0
(22) Date of filing: 12.02.2002
(51) Int. Cl.: B65B 21/20, B65B 57/12

(54) **Manipulating head for cartoning machines**

(30) Priority: 13.02.2001 IT BO010075
(71) Applicant: OMA S.r.l., 37069 Villafranca di Verona (IT)
(72) Inventor: Baldi, Giampietro, 37069 Villafranca di Verona (IT)
(74) Representative: Jorio, Paolo

(57) **Abstract**

A manipulating head (1) for cartoning machines (2), which receive, at the input, a succession of bottles (3) or similar, together with a succession of cartons (4), and supply, at the output, a succession of full cartons (4), each containing a group of bottles (3) arranged in a predetermined "format" with a predetermined "spacing"; the manipulating head (1) having a substantially horizontal supporting plate (10), and a number of gripping devices (11) projecting beneath the supporting plate (10) so as each to grip, on command, a respective bottle (3) or similar; the gripping devices (11) being arranged on the supporting plate (10) to exactly reproduce the spatial arrangement of the group of bottles (3) for transfer, and each being carried by a respective bush (14) mounted to slide inside a corresponding through slot (15) formed on the supporting plate (10); the shape of each through slot (15) being defined by the envelope of the positions the bush (14) sliding along the through slot must be allowed to assume on the supporting plate (10) to align the respective gripping device (11) at all times with the corresponding bottle (3) in the group of bottles (3), alongside variations in the "spacing" of the group of bottles (3). Photocells (21) are provided as control means for the gripping devices (11).

## Description

The present invention relates to a manipulating head for cartoning machines.

More specifically, the present invention relates to a manipulating head for machines for cartoning bottles and similar, to which the following description refers purely by way of example.

In the packaging machine industry, numerous types of cartoning machines are known for receiving at the input a succession of bottles together with a succession of empty, open cartons or similar packaging containers, and for supplying at the output a succession of cartons, each containing a predetermined number of bottles in a predetermined spatial arrangement, i.e. in a predetermined "format" with a predetermined "spacing".

Obviously, the spatial arrangement, i.e. the "format" and "spacing", of the bottles inside the carton depends on the size of the carton and bottles.

Most known cartoning machines comprise: a bottle grouping platform on which successive bottles are grouped into a predetermined spatial arrangement; a first linear conveyor for sequentially positioning a succession of empty, open cartons alongside the bottle grouping platform; and a second linear conveyor for feeding a succession of loose bottles to the bottle grouping platform.

Most known cartoning machines also comprise a manipulating head, which moves over the bottle grouping platform and the first linear conveyor to remove a group of bottles, comprising said predetermined number of bottles in the predetermined spatial arrangement, off the grouping platform, and to deposit the group of bottles inside the carton standing alongside the grouping platform.

Most currently used manipulating heads comprise a horizontal supporting plate; and a number of gripping devices fixed to the underside of the supporting plate and facing the grouping platform and the linear conveyor supplying the empty cartons. The gripping devices each selectively grip and retain a respective bottle on command, and are fixed to the underside of the horizontal supporting plate to exactly reproduce the spatial arrangement of the bottles on the grouping platform.

More specifically, the gripping devices are fixed to the horizontal supporting plate so that, when the manipulating head is arrested over the grouping platform and prepares to remove a group of bottles, each is aligned just over a respective bottle in the group about to be removed.

Cartoning machines of the above type have the major drawback of adapting poorly to changes in the size of the bottles and cartons.

The manipulating heads, in fact, are specially designed and sized to transfer bottles of a given size and with a given spatial arrangement, i.e. a given "format" and "spacing", so that, whenever changes are made to the type of bottle or carton, the manipulating head must also be changed accordingly.

Changing the manipulating heads obviously involves downtime, which, in monetary terms, seriously affects the overall running cost of the machine.

It is an object of the present invention to provide a manipulating head designed to adapt to bottles of different sizes and the same format, so as to reduce downtime and, hence, the running cost of the cartoning machines.

According to the present invention, there is provided a manipulating head for cartoning machines, which receive, at the input, a succession of bottles or similar, together with a succession of packaging containers, and supply, at the output, a succession of full packaging containers, each containing a group of bottles defined by a predetermined number of bottles arranged in a predetermined "format" with a predetermined "spacing"; the manipulating head comprising a substantially horizontal supporting plate, and a number of gripping devices projecting beneath the supporting plate so as each to grip, on command, a respective bottle or similar; the gripping devices being arranged on the supporting plate to exactly reproduce the spatial arrangement of said group of bottles; and the manipulating head being characterized in that each gripping device is carried by a respective bush mounted to slide inside a corresponding through slot formed on the supporting plate.

A non-limiting embodiment of the present invention will be described by way of example with reference to the accompanying drawings, in which:
Figure 1 shows a front view, with parts in section and parts removed for clarity, of a cartoning machine featuring a manipulating head in accordance with the teachings of the present invention;
Figure 2 shows a side view, with parts in section and parts removed for clarity, of the Figure 1 manipulating head;
Figure 3 shows a view along section line I-I in Figure 2;
Figure 4 shows a plan view of a detail of the manipulating head in Figures 1, 2 and 3;
Figure 5 shows a plan view of three distinct configurations of the Figure 4 detail.

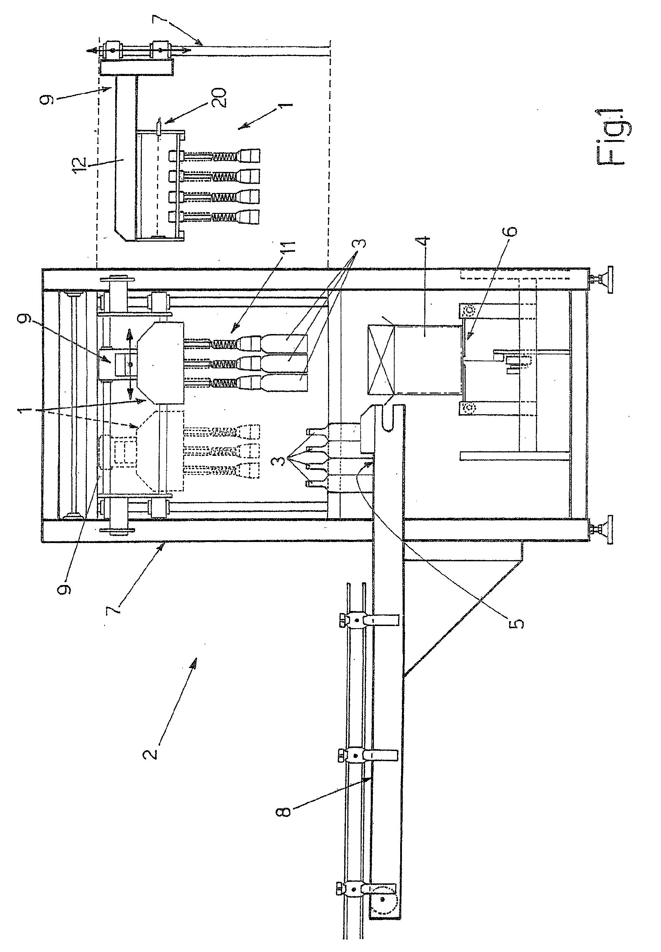

Number 1 in Figures 1, 2 and 3 indicates as a whole a manipulating head, particularly suitable for use on a cartoning machine 2 which receives, at the input, a succession of battles 3 or similar, together with a succession of empty, open cartons 4 or similar packaging containers, and which supplies at the output a succession of full cartons 4, each containing a predetermined number of bottles 3 in a predetermined spatial arrangement, i.e. arranged in a predetermined "format" with a predetermined "spacing".

Obviously, the spatial arrangement of the bottles inside carton 4, i.e. the "format" and "spacing" of bottles 3 inside carton 4, depends on the size of carton 4 and bottles 3. More specifically, the "format" of bottles 3 substantially depends on the size of bottles 3 in relation to the size of carton 4, while the "spacing" of bottles 3 depends on the shape (e.g. diameter) of bottles 3, and on the thickness of any partitions inside carton 4.

In the particular example shown, each carton 4 houses twelve circular-section bottles 3 in a "three-by-four" format, i.e. "three-by-four" matrix, of three adjacent rows of four bottles 3 each. The center distance d' of each two adjacent rows is approximately equal to but no less than the diameter of each bottle 3 plus the thickness of the partition; and, similarly, the center distance d" of each two adjacent bottles 3 in the same row of bottles 3 is approximately equal to but no less than the diameter of each bottle 3 plus the thickness of the partition.

Other "spacings" and/or "formats" are obviously possible, such as "three-by-three", "two-by-three", or "four-by-four", which provides for obtaining four side by side rows of four bottles 3 each.

With reference to Figure 1, cartoning machine 2 in the example shown comprises: a bottle grouping platform 5 on which successive bottles 3 are grouped into a predetermined spatial arrangement, i.e. a predetermined "format" with a predetermined "spacing"; a first conveyor 6 for sequentially positioning a succession of empty, open cartons 4 alongside bottle grouping platform 5; a supporting frame 7 astride grouping platform 5 and conveyor 6; a second conveyor 8 for feeding a succession of loose bottles 3 to bottle grouping platform 5; and a head slide 9 fitted to supporting frame 7 so as to move horizontally and vertically over grouping platform 5 and conveyor 6.

More specifically, in the example shown, bottle grouping platform 5 provides for successively forming bottles 3 into groups of twelve, and for simultaneously arranging each group of bottles 3 into said "three-by-four" format with the aforementioned "spacing".

Manipulating head 1, on command, selectively grips and retains any one group of bottles 3 in the predetermined format, and is fixed to head slide 9 to move over grouping platform 5 and conveyor 6 to remove a group of bottles 3 off grouping platform 5 on command, and to deposit the group of bottles 3 inside the carton 4 standing alongside grouping platform 5.

With reference to Figures 1, 2 and 3, manipulating head 1 comprises a horizontal supporting plate 10 fixed to head slide 9 over grouping platform 5 and conveyor 6; and a number of gripping devices 11 fixed to supporting plate 10 so as to face grouping platform 5 and conveyor 6.

In the particular example shown, head slide 9 has a supporting arm 12 projecting over grouping platform 5 and conveyor 6; and manipulating head 1 has a connecting frame 13 for fixing supporting plate 10 rigidly to supporting arm 12. More specifically, in the example shown, supporting plate 10 is rectangular, and frame 13 is defined by an inverted-U-shaped supporting bracket 13, the central portion of which is fixed to supporting arm 12, and the two axial ends of which are shaped to receive and clamp two opposite lateral edges of supporting plate 10.

Gripping devices 11 each selectively grip and retain a bottle 3, and are arranged on supporting plate 10 to exactly reproduce the spatial arrangement of the groups of bottles 3 formed sequentially on grouping platform 5.

More specifically, gripping devices 11 are fixed to supporting plate 10 so that, when manipulating head 1 is arrested over grouping platform 5 and prepares to remove a group of bottles 3, each gripping device 11 is aligned just over a respective bottle 3 in the group of bottles 3 about to be removed.

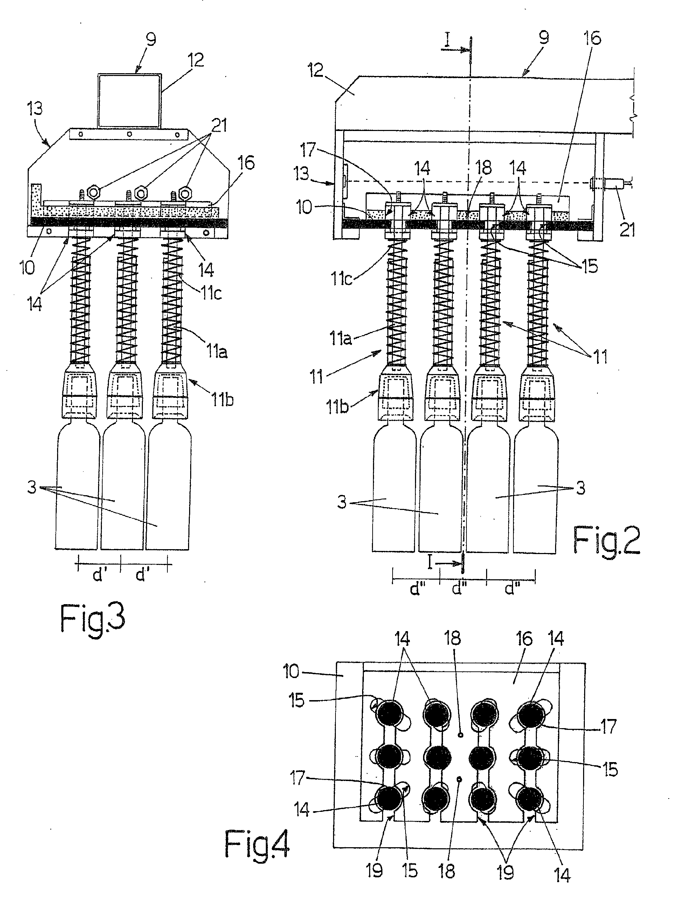

With reference to Figure 2, in the example shown, each gripping device 11 comprises:
a supporting rod 11a mounted to slide axially through and perpendicularly to supporting plate 10;
a pneumatically-controlled gripping cap 11b suspended on the bottom end of supporting rod 11b and for selectively receiving and gripping the neck of any one of bottles 3; and
an elastic element 11c fitted to supporting rod 11a so that a first end rests on gripping cap 11b, and a second end rests on supporting plate 10 to keep the top end of supporting rod 11a resting against supporting plate 10.

It should be pointed out that gripping devices 11 are widely used in this particular field, and are therefore not described in detail.

With reference to Figures 2, 3 and 4, unlike the gripping devices of known manipulating heads, which are fixed rigidly to supporting plate 10, gripping devices 11 of manipulating head 1 are each fixed to a respective bush 14 mounted to slide inside a corresponding through slot 15 formed on supporting plate 10.

In the example shown, supporting rod 11a of each gripping device 11 is mounted to slide axially inside a respective bush 14, and elastic element 11c is positioned with the first end resting on gripping cap 11b, and with the second end resting on bush 14 to keep the top end of supporting rod 11a resting against bush 14, on the opposite side of supporting plate 10 to gripping cap 11b.

With reference to Figure 4, once the "format" of the group of bottles 3, i.e. the number and arrangement of gripping devices 11 and therefore of bushes 14 on supporting plate 10, is established, the shape of each through slot 15 on supporting plate 10 is defined by the envelope of all the positions bush 14 sliding along the slot must be allowed to assume on supporting plate 10 to align respective gripping device 11 at all times with the corresponding bottle 3 in the group of bottles 3, alongside variations in the "spacing", i.e. the size (diameter), of bottles 3.

In other words, through slots 15 on supporting plate 10 are so shaped that, alongside variations in the size of bottles 3, bushes 14 can be positioned accordingly along respective through slots 15, so that each gripping device 11 is aligned with the corresponding bottle 3 in the group of bottles 3. All this, obviously, with no change in the format of the group of bottles 3.

With reference to Figures 2, 3 and 4, manipulating head 1 also has a locating plate 16 which is fixed to supporting plate 10 to position and lock bushes 14 on supporting plate 10 in any of the possible predetermined spatial arrangements alongside variations in the "spacing", i.e. size, of bottles 3; the format of the group of bottles 3 obviously remaining unchanged.

More specifically, locating plate 16 is positioned with one face resting on the top face of supporting plate 10, and has a number of through holes 17 equal to the number of bushes 14 on supporting plate 10. Through holes 17 are each engaged by a respective bush on supporting plate 10, and are arranged on locating plate 16 to match the required spatial arrangement of bushes 14, i.e. of gripping devices 11.

It should be pointed out that, in the example shown, supporting plate 10 has two projecting positioning pins 18 which fit inside through slots on locating plate 16 to ensure the locating plate is positioned correctly at all times on supporting plate 10.

In the example shown, supporting plate 10 also has fastening means (not shown) for selectively fastening locating plate 16 rigidly to supporting plate 10, and which may be defined, for example, by straightforward hand-operated clamps.

Preferably, though not necessarily, locating plate 16 also has a number of parallel transverse slots 19, each for connecting a group of through holes 17 aligned in a row. When assembling locating plate 16 on to supporting plate 10, transverse slots 19 are engaged temporarily by the piping of the pneumatic circuit of cartoning machine 2 governing gripping devices 11.

Preferably, though not necessarily, manipulating head 1 also has a control device 20 for determining when at least one of gripping devices 11 of manipulating head 1 fails to grip and retain the corresponding bottle 3 in the group of bottles 3 about to be removed off grouping platform 5.

In the example shown, control device 20 comprises a number of photocells 21 located on frame 13, just over supporting plate 10, and each aligned with a respective row of gripping devices 11; and an electronic central control unit (not shown) which stops the machine in the event any one of photocells 21 detects an upward movement of at least one of the gripping devices 11 in the row monitored by photocell 21.

Gripping devices 11, in fact, are mounted to slide inside respective bushes 14, so that supporting rod 11a of each withdraws at least partly inside manipulating head 1 in the event the corresponding gripping cap 11b fails to engage the neck of bottle 3; and photocells 21 detect when the top end of supporting rod 11a withdraws too far inside manipulating head 1.

In other words, supporting rod 11a of each gripping device 11 is mounted to slide axially inside respective bush 14 and to move upwards in the event the respective gripping cap 11b jams on the top of respective bottle 3; and photocells 21 detect when the top end of any one supporting rod 11a withdraws past bush 14 to the height of photocells 21.

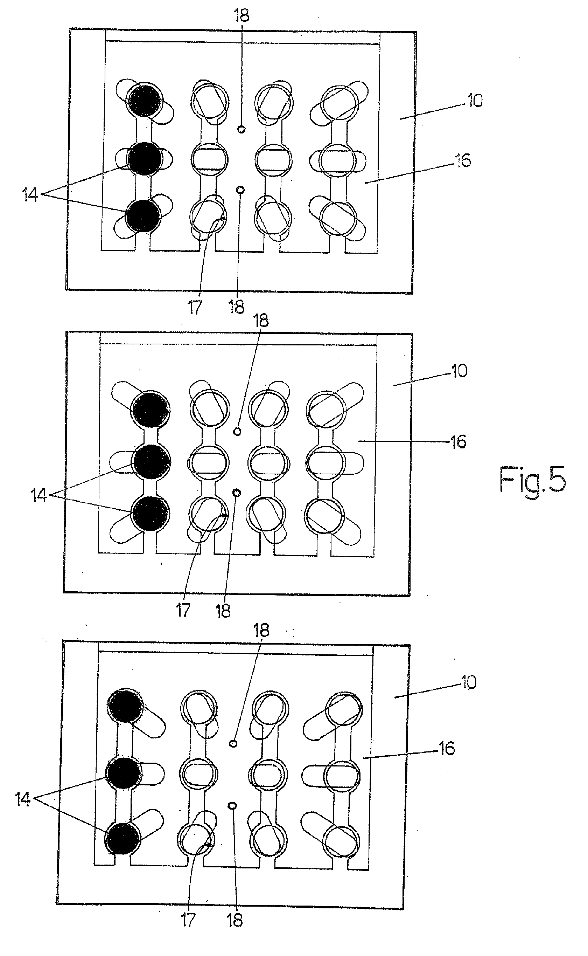

With reference to Figure 5, manipulating head 1 is advantageously provided with a number of locating plates 16 of the type described above, each having through holes 17 with a predetermined spatial arrangement differing from the others and corresponding to the "spacing" of a given type of bottle 3 of a given shape and size.

Each locating plate 16 can be fitted selectively to supporting plate 10 to position gripping devices 11 of manipulating head 1 in the spatial arrangement corresponding to that of the locating plate 16 in question.

Operation of manipulating head 1 and cartoning machine 2 is clear from the foregoing description, with no further explanation required.

The advantages of manipulating head 1 are obvious: once a manipulating head 1 designed for a given format is fitted to cartoning machine 2, locating plate 16 need simply be changed to adapt manipulating head 1 to groups of bottles 3 with any of the possible "spacings" for that particular format.

Locating plates 16 can be changed rapidly, thus greatly reducing downtime and the running cost of cartoning machine 2.

Clearly, changes may be made to manipulating head 1 as described and illustrated herein without, however, departing from the scope of the present invention.

## Claims

1. A manipulating head (1) for cartoning machines (2), which receive, at the input, a succession of bottles (3) or similar, together with a succession of packaging containers (4), and supply, at the output, a succession of full packaging containers (4), each containing a group of bottles (3) defined by a predetermined number of bottles (3) arranged in a predetermined "format" with a predetermined "spacing"; the manipulating head (1) comprising a substantially horizontal supporting plate (10), and a number of gripping devices (11) projecting beneath the supporting plate (10) so as each to grip, on command, a respective bottle (3) or similar; the gripping devices (11) being arranged on the supporting plate (10) to exactly reproduce the spatial arrangement of said group of bottles (3); and the manipulating head (1) being **characterized in that** each gripping device (11) is carried by a respective bush (14) mounted to slide inside a corresponding through slot (15) formed on the supporting plate (10).

2. A manipulating head as claimed in Claim 1, **characterized in that** the shape of each said through slot (15) on the supporting plate (10) is defined by the envelope of the positions said bush (14) sliding along said through slot must be allowed to assume on the supporting plate (10) to align the respective gripping device (11) at all times with the corresponding bottle (3) in said group of bottles (3), alongside variations in the "spacing" of the group of bottles (3).

3. A manipulating head as claimed in Claim 1 or 2, **characterized by** comprising locating means (16) which can be fitted selectively to said supporting plate (10) to position and lock said bushes (14) on the supporting plate (10) in any one of the possible predetermined spatial arrangements, alongside variations in the "spacing" of the bottles (3).

4. A manipulating head as claimed in Claim 3, **characterized in that** said locating means (16) comprise at least one locating plate (16) which is positioned with one face resting on a corresponding face of the supporting plate (10), and comprises a number of through holes (17) equal to the number of bushes (14) on the supporting plate (10); said through holes (17) each being engaged by a respective bush (14) on the supporting plate (10), and being arranged on the locating plate (16) to position the gripping devices (11) in the same spatial arrangement as the bottles (3) in said group of bottles (3).

5. A manipulating head as claimed in Claim 4, **characterized in that** said supporting plate (10) comprises positioning means (18) for ensuring said locating plate (16) is positioned correctly on the supporting plate (10).

6. A manipulating head as claimed in any one of the foregoing Claims, **characterized in that** each gripping device (11) comprises a supporting rod (11a) mounted to slide axially through a corresponding bush (14) and perpendicularly to the supporting plate (10); a gripping cap (11b) suspended on the bottom end of said supporting rod (lib) and for selectively receiving and gripping the neck of any one bottle (3); and an elastic element (11c) fitted to the supporting rod (11a) to keep the top end of said supporting rod (11a) resting against the bush (14).

7. A manipulating head as claimed in any one of the foregoing Claims, **characterized by** comprising a control device (20) for controlling the gripping devices, and for determining when at least one of said gripping devices (11) fails to grip and retain the corresponding bottle (3) in said group of bottles (3).

8. A manipulating head as claimed in Claim 7, **characterized in that** said control device (20) comprises a number of photocells (21) located over the supporting plate (10) and each aligned with a respective row of gripping devices (11); each of said photocells (21) detecting an upward movement of at least one of the gripping devices (11) in the row controlled by the photocell (21).
